Europäisches Patentamt

European Patent Office

Office européen des brevets

(11) Veröffentlichungsnummer : **0 434 683 B1**

(12) **EUROPÄISCHE PATENTSCHRIFT**

(45) Veröffentlichungstag der Patentschrift :
**16.12.92 Patentblatt 92/51**

(21) Anmeldenummer : **89904024.0**

(22) Anmeldetag : **31.03.89**

(86) Internationale Anmeldenummer :
**PCT/EP89/00346**

(87) Internationale Veröffentlichungsnummer :
**WO 89/10994 16.11.89 Gazette 89/27**

(51) Int. Cl.$^5$ : **D05B 79/00**

(54) **NÄHMASCHINE MIT EINER LEUCHTE.**

(30) Priorität : **05.05.88 DE 8805970 U**

(43) Veröffentlichungstag der Anmeldung :
**03.07.91 Patentblatt 91/27**

(45) Bekanntmachung des Hinweises auf die
Patenterteilung :
**16.12.92 Patentblatt 92/51**

(84) Benannte Vertragsstaaten :
**IT**

(56) Entgegenhaltungen :
**DE-U- 8 703 621**
**DE-U- 8 715 645**
**US-A- 1 701 344**
**US-A- 1 924 157**

(73) Patentinhaber : **G.M. PFAFF**
**AKTIENGESELLSCHAFT**
**Königstrasse 154**
**W-6750 Kaiserslautern (DE)**

(72) Erfinder : **DUSCH, Albert**
**Karl-Pfaff-Siedlung 12**
**W-6750 Kaiserslautern (DE)**

(74) Vertreter : **Klein, Friedrich**
**Königstrasse 154**
**W-6750 Kaiserslautern (DE)**

EP 0 434 683 B1

Jouve, 18, rue Saint-Denis, 75001 PARIS

**Beschreibung**

Nähmaschine mit einer Leuchte

Die Neuerung betrifft eine Nähmaschine nach dem Oberbegriff des Anspruches 1.

Eine derartige Nähmaschine ist aus der deutschen Gebrauchsmusterschrift 87 03 621 bekannt. Die Leuchte weist eine Lichtquelle auf, deren Lichtstrahlen über Lichtleiter weitergeleitet werden. Diese ragen an der Unterseite des Kopfes dicht neben der Nadelstange aus dem Gehäuse und beleuchten die Stichplatte.

Die Lichtleiter engen den Durchgangsraum unter dem Kopf erheblich ein, wobei nicht auszuschließen ist, daß die Näherin beim Führen eines Nähgutes die Lichtleiter verstellt, so daß diese erneut auszurichten sind.

Der im Anspruch 1 angegebenen Neuerung liegt die Aufgabe zugrunde, die Leuchte so auszubilden und an der Nähmaschine anzuordnen, daß ein beliebiges Maschinenteil beleuchtbar ist, ohne den Arbeitsbereich und das Blickfeld der Näherin durch die Leuchte nachteilig zu beeinflussen.

Diese Aufgabe wird bei der neuerungsgemäßen Anordnung durch die kennzeichnenden Merkmale des Anspruches 1 gelöst.

Da der Gehäuseteil neben seiner eigentlichen Aufgabe auch zur Aufnahme der Leuchte vorgesehen ist, entfällt ein zusätzlicher Träger, der häufig nicht nur das Erscheinungsbild der Nähmaschine nachteilig beeinflußt, sondern, oftmals in den Arbeitsbereich der Näherin ragend, als hinderlich empfunden wird.

Die verdeckte Anordnung des Lichtleiters sowie die dem Gehäuseteil angepaßte Form von dessen Endstück bewirken, daß die Näherin gegen Streulicht abgeschirmt ist und die Leuchte als integriertes Bauteil der Nähmaschine ihre Funktion erfüllt, ohne den Blick der Näherin zu versperren.

Durch die Ausrichtbarkeit des Endstückes nach Anspruch 2 ist die Lage und die Abbildungsschärfe eines auf dem zu beleuchtenden Maschinenteil abgebildeten Lichtpunktes verstellbar, wobei durch Schwenken des Endstückes die Lage des Lichtpunktes veränderbar und durch Bewegungen mit einer vertikalen Komponente der Lichtpunkt auf dem Maschinenteil fokussierbar ist.

Das Gehäuseteil nach Anspruch 3 ist besonders für die Aufnahme des Endstückes geeignet, da der Schutzbügel in einem durch die Bewegungsbahn des Fadenhebels vorgegebenen Abstand entlang des Kopfes geführt ist. Der das Endstück aufnehmende Schutzbügel sollte an seinem unteren Ende zur Nadel gerichtet sein, so daß das Ende des der Form des Schutzbügels entsprechenden Endstückes zwangsläufig auf die Stichplatte gerichtet ist. Die schwenkbare Lagerung des Endstückes dient dann lediglich zur Feineinstellung.

In Anspruch 4 ist eine konstruktive Maßnahme zum Verstellen des Endstückes angegeben.

Die Neuerung ist anhand eines in der Zeichnung dargestellten Ausführungsbeispieles erläutert.

Es zeigt:

Fig. 1 eine schaubildliche Darstellung einer Nähmaschine mit einer Leuchte,

Fig. 2 die Leuchte nach einem Schnitt der Linie II-II der Fig. 1,

Fig. 3 die Vorderseite der Nähmaschine, teilweise geschnitten nach der Linie III-III der Fig. 1,

Fig. 4 einen Schnitt nach der Linie IV-IV der Fig. 1,

Fig. 5 einen vergrößert herausgezeichneten, in Fig. 3 strichpunktiert eingekreisten Bereich.

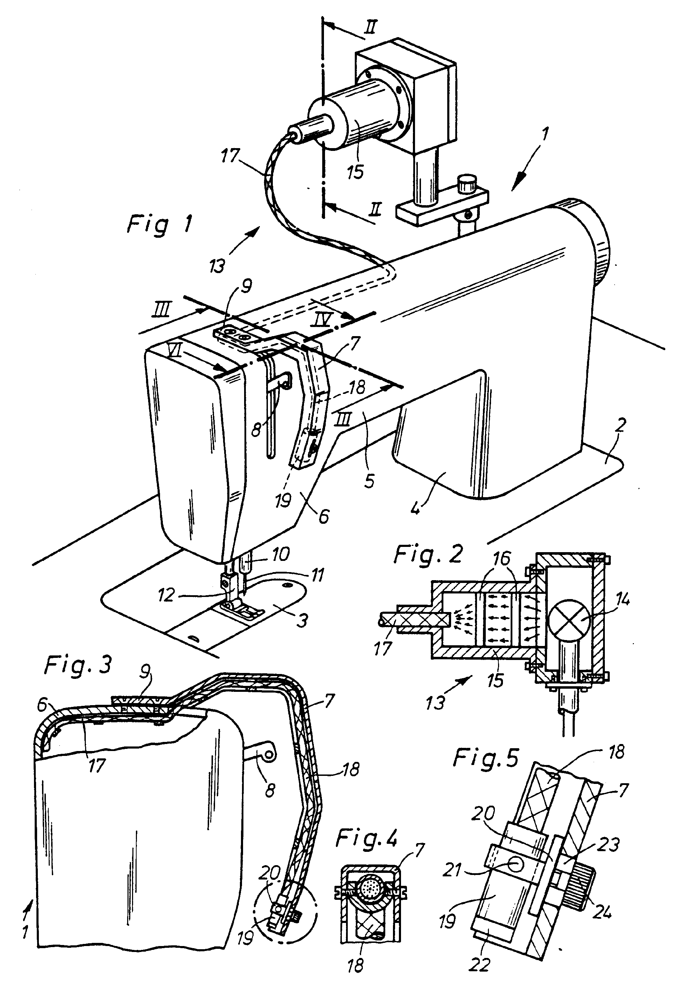

In Fig. 1 ist eine Nähmaschine dargestellt, deren Gehäuse (1) durch eine Grundplatte (2) mit einer Stichplatte (3), einen Ständer (4), einen Arm (5) und einen Kopf (6) gebildet ist. An der Oberseite des Kopfes (6) ist ein Schutzbügel (7), der einen in gebräuchlicher Weise angetriebenen Fadenhebel (8) überdeckt, durch eine Halterung (9) befestigt. Desweiteren ist im Kopf (6) eine Nadelstange (10), die eine Nadel (11) trägt und eine Stoffdrückervorrichtung (12) in nicht dargestellter Weise gelagert.

Am Gehäuse (1) ist eine Leuchte (13) aufgenommen, die eine Lichtquelle (14) (Fig. 2) aufweist. Der Lichtquelle (14) sind in einem Zylindergehäuse (15) vorgesehene, abstrahiert gezeichnete Linsen (16) nachgeordnet. Auf der anderen Seite der Linsen (16) ist ein Lichtleiter (17) in das Zylindergehäuse (15) geführt.

Der Lichtleiter (17) verläuft von dem Zylindergehäuse (15) zur Nähmaschine (Fig. 1), tritt an deren Rückseite in das Gehäuse (1) ein, wird entlang des Armes (5) und des Kopfes (6) geführt und tritt an der Oberseite des Kopfes (6) hinter der Halterung (9) des Schutzbügels (7) aus. Das letzte Stück des Lichtleiters (17), im folgenden als Endstück (18) bezeichnet, ist an der dem Gehäuse (1) zugewendeten Seite des mit U-förmigem Querschnitt (Fig. 4) ausgebildeten Schutzbügels (7) befestigt. Am freien Ende des Endstückes (18) ist ein Leuchtkopf (19) befestigt, der in einem Lagerelement (20) um Zapfen (21) (Fig. 5) schwenkbar aufgenommen ist und eine Linse (22) zum Bündeln der Lichtstrahlen aufweist. Das Lagerelement (20) ist in einem Langloch (23) des Schutzbügels (7) verschiebbar gelagert und durch eine Stellschraube (24) feststellbar.

Die Anordnung arbeitet wie folgt:

Die von der Lichtquelle (14) emittierten Lichtstrahlen werden durch die Linsen (16) gebündelt und dem Lichtleiter (17) zugeleitet, der diese an den Leuchtkopf (19) überträgt.

Der Lichtleiter (17) ist dabei so geführt, daß er an der Vorderseite der Nähmaschine nicht sichtbar und der Näherin nicht hinderlich ist.

Der Leuchtkopf (19) wird durch Schwenken um die Zapfen (21) ausgerichtet, damit die Lichtstrahlen in Richtung der Nadel (11) abgestrahlt werden. Die auf der Stichplatte (3) auftreffenden Lichtstrahlen bilden auf dieser einen Lichtpunkt, der nach Lösen der Stellschraube (24) durch Verschieben des Lagerelementes (20) entlang des Langloches (23) fokussierbar ist.

## Patentansprüche

1. Nähmaschine mit einer Leuchte, die eine Lichtquelle und einen mit einer Umhüllung ausgebildeten Lichtleiter, dessen Endstück aus dem Gehäuse der Nähmaschine ragt, aufweist, dadurch gekennzeichnet, daß das Endstück (18) der Form eines gegenüber dem Gehäuse (1) hervorstehenden Teiles (7) desselben angepaßt ist und entlang einer dem Gehäuse (1) zugewendeten Seite des Gehäuseteiles (7) verläuft.

2. Nähmaschine nach Anspruch 1, dadurch gekennzeichnet, daß das Endstück (18) verstellbar am Gehäuseteil (7) angeordnet ist.

3. Nähmaschine nach Anspruch 1 oder 2, dadurch gekennzeichnet, daß das Gehäuseteil (7) von dem Schutzbügel für den Fadenhebel (8) gebildet ist.

4. Nähmaschine nach Anspruch 1, 2 und 3, dadurch gekennzeichnet, daß der Schutzbügel (7) eine Führung (23) aufweist, entlang der das Endstück (18) bewegbar ist.

## Claims

1. Sewing machine having a light comprising a light source and a sleeved light guide, the end piece of which protrudes from the sewing-machine housing, **characterised in that** the end piece (18) is matched to the shape of a part (7) which protrudes from the housing (1), and that it extends along a side of the housing part (7) which faces towards the housing (1).

2. Sewing machine according to claim 1, **characterised in that** the end piece (18) is adjustably fitted to the housing part (7).

3. Sewing machine according to claim 1 or 2, **characterised in that** the housing part (7) is formed by the protective yoke for the thread lever (8).

4. Sewing machine according to claim 1, 2 and 3, **characterised in that** the protective yoke (7) comprises a guide (23) along which the end piece (18) is movable.

## Revendications

1. Machine à coudre avec une lampe présentant une source lumineuse et un guide de lumière réalisé avec une gaine, dont la pièce d'extrémité sort du carter de la machine à coudre, caractérisée en ce que la pièce d'extrémité (18) est adaptée à la forme d'une pièce (7), faisant saillie du carter (1) et s'étend le long d'une paroi de la partie de carter (7) tournée vers le carter (1).

2. Machine à coudre selon la revendication 1, caractérisée en ce que la pièce d'extrémité (18) est disposée réglable sur la partie de carter (7).

3. Machine à coudre selon la revendication 1 ou 2, caractérisée en ce que la partie de carter (7) est formée par l'étrier de protection pour le levier à fil (8).

4. Machine à coudre selon la revendication 1, 2 et 3, caractérisée en ce que l'étrier de protection (7) présente un guidage (23) le long duquel la pièce d'extrémité (18) est déplaçable.

Fig 1

Fig. 2

Fig. 3

Fig.4

Fig.5